# EUROPEAN PATENT APPLICATION

(11) **EP 2 916 570 A1**
(43) Date of publication of application: **09.09.2015**
(21) Application number: 14158154.6
(22) Date of filing: 06.03.2014
(51) Int. Cl.: H04W 4/02

(54) **Method for registering a user's activities with a mobile device and mobile device arranged to register a user's activities**

(71) Applicant: VOVB en Partners B.V., 3581 CK Utrecht (NL)
(72) Inventor: Kikstra, Sybren Wouter, 3583 VG Utrecht (NL); Smit, Stephan Johannes, 3572 LK Utrecht (NL); Van Bentum, Johannes Wilhelmus Maria, 3583 HA Utrecht (NL)
(74) Representative: Doolaar, Frans

(57) **Abstract**

The invention relates to a method for registering a user's activities with a mobile device, comprising
- registering a plurality of happenings, each happening comprising the location of the device, the time and the output of one or more sensors and assigning a happening type to each happening in the plurality of happenings;
- parsing the plurality of happenings into a plurality of behaviors from a set of behavior types.
- parsing the plurality of behaviors into a plurality of scenarios from a set of scenario types.

## Description

The invention relates to a method and to a mobile device.

With known mobile registration app for mobile devices, it is possible to collect data about the position of the mobile device using the GPS-system. When determining a position based on the GPS-system, both the position and the related time are determined. This can then be used to see how fast the user has run around a track.

However, this data is not conclusive with regards to what the user has actually done and cannot be used directly for registering the user's activities.

Accordingly it is an object of the invention to improve the above mentioned position determination.

The object is reached by a method according to claim 1 providing a first embodiment of the invention.

By registering the output of one or more sensors, the happenings can be parsed to behaviors selected from a set of behavior types in the parsing step. By parsing the happenings into behaviors, the behaviors of a user carrying the mobile device are determined.

The output of the one or more sensors may be the distance to a nearby other mobile device (or the field strength of a field emitted by the nearby other the mobile device, the detection of a shaking movement of the mobile device, or the acceleration (or deceleration) of the device.

A second embodiment of the invention is provided by a method according to claim 2.

When parsing the happenings into behaviors, a large granularity of behaviors is obtained. The granularity may not be useful for a user of the method. The inventors found by parsing the behaviors into scenarios, the granularity of the intervals can be reduced in a simple way, i.e. with a set of rules based on the behavior types. Such a set of rules is less complex than sets of rules based on location of the device, the time and the output of the one or more sensors.

A third embodiment of the invention is provided by a method according to claim 3.

By arranging that each happening corresponds to a unique time instant, the happenings can be parsed into behaviors simply and efficiently. The method being simple and efficient is for instance advantageous when applied on the mobile device as this reduces memory requirements and battery consumption of the mobile device.

A forth embodiment of the invention is provided by a method according to claim 4.

As the happenings each relate to a unique time, and the behaviors correspond to unique time intervals the sets of rules, the happenings can be parsed simply and efficiently into behaviors. This is for instance advantageous when the method is applied on the mobile device as this will reduce memory requirements and save battery lifetime of the mobile device.

A fifth embodiment of the invention is provided by a method according to claim 5.

As the behaviors correspond to unique time intervals, the plurality of behaviors can be parsed simply and efficiently into a plurality of scenarios at further unique time intervals.

Simple and efficient parsing is for instance advantageous when applied on the mobile device, as this will reduce memory requirements and battery consumption of the mobile device.

A sixth embodiment of the invention is provided by a method according to claim 6.

Advantageously, the method can be used to measure the proximity of users of the method by measuring the proximity to their devices, without contact with the users via WiFi, 3G or with a back-end. Contact with users (peers) via WiFi, 3G or a back-end is not allowed in some countries for privacy reasons.

Advantageously, the field emitted by the further device is a Bluetooth signal. Bluetooth signal emitters have well defined field strengths. Thus, by measuring the field strength at the mobile device, the distance to the further device can be determined.

A seventh embodiment of the invention is provided by a method according to claim 7.

According to the Bluetooth protocol, when a connection has been set up between two Bluetooth devices, each Bluetooth device is in either central mode or peripheral mode. However, if a connection is set up and a device is in peripheral mode, that device will not be able to detect the entry of another person (such as a client or a colleague).

By switching the Bluetooth device to the peripheral mode, other Bluetooth device may set up a connection with the Bluetooth device and measure the distance of the mobile device. For instance, other users can accordingly obtain the same information (although corresponding to a slightly different time instant).

An eight embodiment of the invention is provided by a method according to claim 8.

By registering only happenings when triggered by a change in the location of the device or a change in the output of the one or more sensors, the number of happenings to be registered is kept low, while still all relevant information is measured.

A further preferred ninth embodiment comprises the step of exporting the parsed behaviors and / or parsed scenarios to an external database, such as a digital calendar, as claimed in claim 9.

When the data is parsed into behaviors and preferably scenarios, this can be exported to commonly used applications such as a digital calendar. The behaviors and / or scenarios are for example exported as events into the calendar of the user.

A tenth embodiment of the invention is provided by a mobile device according to claim 10.

Because the registration means are arranged to register the output of one or more sensors, the happenings can be parsed to behaviors selected from a set of behavior types by the parser means. By parsing the happenings into behaviors, the behaviors of a user carrying the mobile device are determined.

The output of the one or more sensors may be the distance to a nearby other mobile device (or the field strength of a field emitted by the nearby other the mobile device, the detection of a shaking movement of the mobile device, or the acceleration (or deceleration) of the device.

Further embodiments of the invention are provided by claims 11 to 15.

Examples of embodiments the invention will now be described with reference to the accompanying schematic drawings. The examples are not intended to be exhaustive or otherwise limit or restrict the invention to the precise configurations shown in the drawings and disclosed in the following detailed description.
Figure 1 depicts an exemplary sequence of logged happenings
Figure 2 depicts an exemplary sequence of behaviors
Figure 3 depicts joining behaviors of equal type
Figure 4 depicts parsing behaviors into scenarios

A smartphone according to the invention comprises a GPS-sensor. The GPS-sensor is arranged to provide a tuple of information comprising the longitude, latitude and altitude as well as UTC time and speed to an app.

Computer code is present in the memory of the smartphone, here in the form of an app.

When the app runs, at different time instants, tuples from the GPS-sensor are registered in a log. The log comprises a number of log entries, also referred to as track points, each log entry corresponding to a unique time instant. Each track point comprises a tuple and may comprise further data such as flags and the output of an accelerometer and a Bluetooth device.

The accelerometer provides the acceleration of the smartphone in three directions as output to the app.

A log entry is flagged as Start move happening when the accelerometer sensor out exceeds a 'fine' preset upper threshold of a preset period. A Stop move happening is generated when any other state of the accelerometer besides the state corresponding to the Start move happening is detected.

A log entry is flagged as Start travel happening when the accelerometer sensor output exceeds a 'coarse' preset upper threshold for preset period. A log entry may also be flagged as Start travel happening when the speeds reported by the GPS-sensor exceeds a preset upper threshold. A log entry is flagged as Stop travel happening when any other state of the accelerometer and GPS-sensor besides the state corresponding to the Start travel happening is detected.

A log entry is flagged as Start still happening when the accelerometer sensor output drops below both the 'fine' and 'coarse' preset lower thresholds for a preset period and the GPS-sensor reports a speed dropping below a preset lower threshold. A Stop still happening is generated when any other state of the accelerometer and the GPS-sensor besides that state corresponding to a Start still happening is detected.

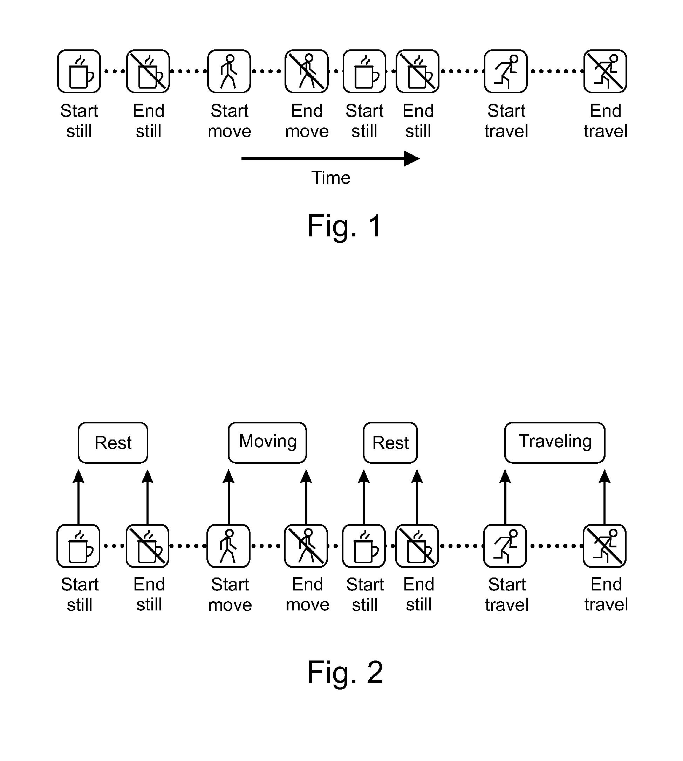

Figure 1 depicts an exemplary overview of logged happenings.

The smartphone also comprises a Bluetooth device. The Bluetooth device is arranged to set up a connection to a further Bluetooth device, such as a Bluetooth device on a beacon. For this, the Bluetooth device functions in a central mode. In this mode, the Bluetooth device scans for the presence of other Bluetooth devices. When the further Bluetooth device is found, it sets up a connection. According to the Bluetooth protocol, the Bluetooth device can then ask the further Bluetooth device for data. In fact, the Bluetooth device only has limited tasks such as identifying the further Bluetooth device and measuring the field strength of the field emitted by the further Bluetooth device. At setting up the connection, the Bluetooth device sends out a request for an email address which uniquely identifies the further Bluetooth device. The further Bluetooth device responds by sending the email address. The Bluetooth device then identifies the further Bluetooth device from a list of email addresses linking the email addresses to locations of beacons and names of peers.

The field strength emitted by Bluetooth devices is defined by a Bluetooth standard. The deviation between the measured received field strength and the emitted field strength at the further Bluetooth device is attributed to distance. By measuring the received field strength of the field emitted by the further Bluetooth device, the distance can be determined.

To obtain low energy consumption, the Bluetooth device works according to the Bluetooth low energy standard. After setting up the connection and receiving the email address and determining the field strength, the connection is dropped.

The field strength thus provides information of the location of the smartphone in addition to the GPS-sensor. This is advantageous as the combination of location information from the Bluetooth device and GPS-position is more accurate than just the GPS-position.

The central periodically scans and reidentifies the peripherals, at which moment the field strenght is registered.

Instead of a beacon, the Bluetooth device can also detect the presence of a peer with a running a copy of the app and comprising the further Bluetooth device.

To allow the further smartphone to store information on the distance to the smartphone, the Bluetooth device switches to a peripheral mode at random time instants. In addition, the further Bluetooth device switches to central mode at further random time instants.

### Happenings

Depending on the output of the sensors and the changes of the GPS-position in the tuple over time, the app flags the log entries with happening types. For instance upon setting up a connection with the further Bluetooth device of the smartphone of a peer, the measured field strength may correspond to a relative strength indicator (RSSI) smaller than -95 dBm, corresponding to a distance of 20-50 m between the smartphone and the further smartphone. A log entry is created whereby the identity of the peer is stored together with a distance indicator 'far'. Because the peer and the user of the smartphone want to meet the distance decreases. At a later instant, the relative strength indicator is larger than -95 dB, but smaller than -75 dB. This corresponds to a distance of 5 to 20 m. A log entry is created whereby the identity of the peer is stored together with a distance indicator 'near'. At a later instant the measured field strength further increases such that the RSSI is larger than or equal to -75 dB corresponding to a distance smaller than 5 m. The first log entry (track point) corresponding to the RSSI being larger than -75 dB, the corresponding log entry is flagged as Attendee change happening and the identity of the attendee is stored together with the distance indication 'immediate'.

Later on, when the distance with the peer increases, the relative strength indicator will be less than - 75.0 dBm. The first log entry corresponding to this situation is also flagged as Attendee change happening together with the identification of the Attendee and the relevant distance indicator.

A happening 'Beacon change' is generated when the above Bluetooth signal originates from a beacon instead of a peer device.

A happening 'Contact change' is generated by the app when the device moves into or out of a preset distance radius from a contact address that is in the devices' address book.

The app automatically stores happenings flags for Start move, Stop move, Start travel, Stop travel, Start still, Stop still, Attendee change, Beacon change, and Contact change. The app may also allow the user to create an entry into the log as a result of a user tapping a control in the app (such as to create a happening of type Mark, Meet or Note) or shaking the device (to create a happening of type Shake).

### Behaviors

The app also parses happenings into behaviors. A behavior represents an interval with a certain user behavior. The behaviors resulting from parsing the happenings each correspond to a unique time interval.

For example, a behavior 'Traveling' is derived from parsing the log for happenings 'Start travel' and 'End travel' and generating a behavior for each pair of these happenings. Figure 2 gives an example of a sequence of behaviors.

Behaviors are registered by setting behavior flags at the log entries corresponding to the start and end of the travel behavior.

For this the app executes code on a processor of the smartphone, for instance trigger by the user activating the parsing mode.

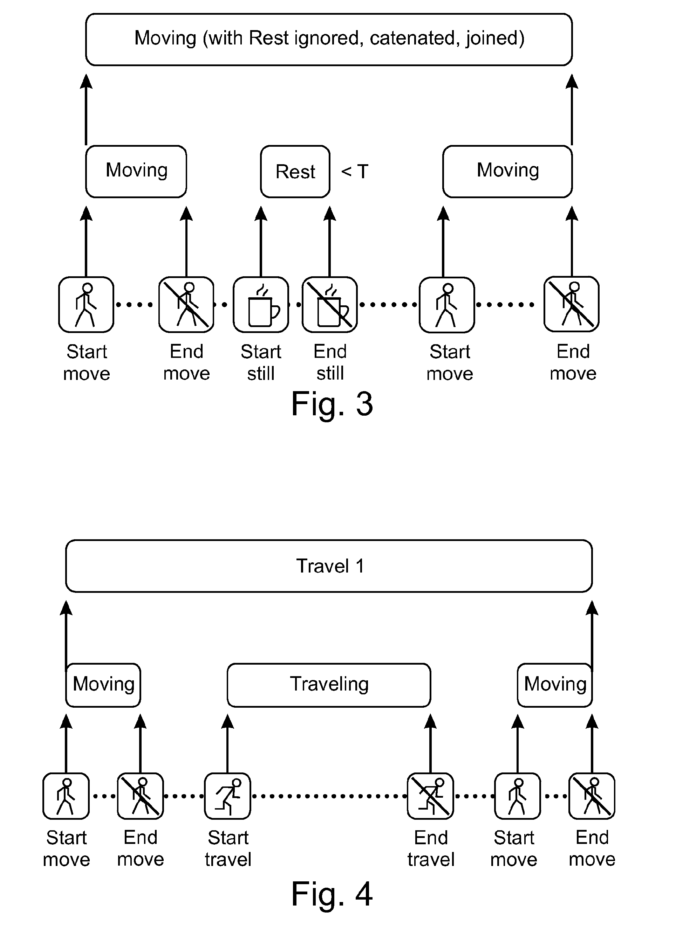

Join indicates if subsequent behaviors of a certain type, say type Moving, should be joined automatically. Subsequent behaviors of type Moving can result if a behavior of the type Rest separating them is ignored. This is depicted in figure 3. In figure 3, the behavior Rest is ignored because its duration is below a threshold. The Start still and Stop still constituting the Rest are catenated to the preceding Moving behavior. Then, the Moving behaviors that succeed each other are joined.

The app uses a number of different kinds of behaviours entitled 'Moving', 'Traveling', 'At rest', 'Meeting' and 'Pooling'.

The behaviour 'Moving' identifies movement a bit, typically, but not necessarily, in or between rooms in a building, at one location.

The behaviour 'Traveling' identifies significant movement, typically by bike, car or train, between locations.

The behaviour 'At rest' identifies being at rest at a location.

The behaviour 'Meeting' identifies being at rest and being joined by a least one person as an attendee.

The behaviour 'Pooling' identifies traveling, and during travel being joined by at least one person as a fellow traveller.

### Parser operation

Parsing happenings into behaviors, i.e. behavior parsing, is established by a method using several steps executed by a microprocessor of the smartphone using volatile memory of the smarthpone.

Behavior parsing is based on a set of parameters. The set of parameters comprises active, ignore below, catenate if ignored and join.

Active indicates that the detection of the corresponding behavior is de-activated in the log.

Ignore below sets a minimum duration required to be accepted as behavior.

Catenate if ignored indicates, if a behavior is not accepted (for instance because of the duration), if the happenings that constitute the behavior are catenated to a previous behavior. These happenings are then not interpreted; the system behaves as if the constituting happenings did not occur.

When parsing, the log entries are sorted in chronological order using the time in the log entries. This is possible, because the log entries correspond to unique time instants.

During a first pass, for each log entry the happening flag is checked. When it for instance corresponds to 'Start move', the parser will store the 'behavior' Moving in a 'current behavior' register.

When the parser encounters a Stop move 'happening', the parser will enter the behavior identifier for 'Moving' into the 'current behavior' register and will set a behavior flag in the log entry.

Because the log is chronological, it is implicit from the log if a behavior starts or stops at a log entry. If the duration of a 'behavior' is shorter than a required minimum duration, its sentinel log entries (i.e. the log entries at the start or stop of a behavior) are marked as 'ignored'.

During a second pass, behaviors are assigned as in the first pass, but ignored happenings are skipped (ignored).

The behaviors resulting from the second pass are copied to a volatile memory of the smartphone together with information on the behavior such as start date, end date, type, etc.

### Scenarios

The app also parses behaviors into scenarios. A scenario represents a profession-specific interval, such as 'Consult', when the user is at reset for a period of time in the vicinity of another user that is known to be a client.

Just like behaviors can filter out repeating happenings or consolidate similar happenings, scenarios can filter out repeating behaviors or consolidate similar behaviors. This is advantageous, for example, for disregarding a temporary interruption of moving when stopping at a traffic light.

Scenarios are registered by setting scenario identifiers for the log entries (track points) that are at its start and end times. This is shown in figure 4.

Scenario 'Travel 1' in figure 4 corresponds Moving (e.g. to a car), then Traveling at significant speed and then Moving again (e.g. walking from the car to a building). Thus the consecutive behaviors Moving, Traveling and Moving are consolidated into the scenario 'Travel 1'.

The app allows the user to enter the work hours and work days. These settings define the value of a flag 'during work' at any time. This flag is consulted by the app to identify scenarios.

The app uses a number of different kinds of scenarios entitled 'Work', 'Consult', 'Visit', 'Leisure', 'Travel 1' and 'Identity'.

The scenario 'Work' identifies behavior 'At rest', during work.

The scenario 'Consult' identifies behavior 'Meeting' with one attendee, during work.

The scenario 'Visit' identifies behavior 'At rest' at a contact's address.

The scenario 'Leisure' identifies behavior 'At rest', outside of work hours.

The scenario 'Travel 1' consolidates behavior sequences such as Moving, Traveling, Moving and Traveling, Moving, Traveling.

The scenario 'Identity' interprets all individual behaviors as scenarios directly. If none of the scenario definitions checked before the Identity scenario incorporates a behavior in the log, a scenario is created for the behavior. The scenario 'Identity' is essentially a behavior-to-scenario 'renaming' operation.

### Parser operation

Parsing behaviors into scenarios, i.e. scenario parsing, is established by a method comprising several steps, which are conducted by the microprocessor of the smartphone using volatile memory of the smartphone.

Scenario parsing may be based on a set of parameters, for instance to round off the start and end times of scenario time intervals.

The behaviors resulting from the behavior parsing and stored in the volatile memory of the smartphone are used as input for the scenario parsing.

The behaviors are enumerated chronologically and for one scenario at a time. When a behavior is recognized for a scenario, the log entries corresponding to the start and end of the behavior are flagged with a scenario identifier.

Because the behaviors correspond to unique time intervals, the scenarios resulting from this parsing operation also correspond to unique time intervals.

### Registration of a scenario in the user's Calendar

The app allows a scenario to be added as an event to the user's standard Calendar. Scenario notes are copied to the event.

The app allows adjustment of the starting and ending times of any existing event in the user's standard Calendar to the starting and ending times of a scenario, respectively. Scenario notes are catenated to the notes of the event.

## Claims

1. Method for registering a user's activities with a mobile device, comprising the steps of:
- registering a plurality of happenings, each happening comprising the location of the device, the time and the output of one or more sensors and assigning a happening type to each happening in the plurality of happenings;
- parsing the plurality of happenings into a plurality of behaviors from a set of behavior types.

2. Method according to claim 1, further comprising the step of:
- parsing the plurality of behaviors into a plurality of scenarios of a set of scenario types.

3. Method according to claim 2, wherein each happening corresponds to a unique time instant.

4. Method according to claim 3, wherein each behavior of the plurality of behaviors corresponds to a unique time interval.

5. Method according to claim 4, wherein each scenario corresponding to a further unique time interval.

6. Method according to any of the claims 1 to 5, wherein the output of the one or more sensors comprises the field strength of a field emitted by a further device and to determine the distance to the further device based on the measured field strength.

7. Method according to claim 6, wherein the further device comprises a further Bluetooth device, and the method comprises the further steps:
- setting a Bluetooth device of the mobile device in central mode at a first time instant;
- building a connection with the further Bluetooth device in peripheral mode and measuring the field strength of a field emitted by the further Bluetooth device;
- switching the Bluetooth device into peripheral mode after a random time interval.

8. Method according to any of the previous claims, comprising the step of triggering the registration of a happening upon a change in the location of the device or a change in the output of the one or more sensors.

9. Method according to any of the previous claims, comprising the step of exporting the parsed behaviors and / or parsed scenarios to an external database, such as a digital calendar.

10. Mobile device arranged to register a user's activities, comprising:
- registration means to register a plurality of happenings, each happening comprising the location of the device, the time and the output of one or more sensors and arranged to assign a happening type to each happening in the plurality of happenings based on the happenings;
- parsing means to parse the plurality of happenings into a plurality of behaviors from a set of behavior types.

11. Mobile device according to claim 10, comprising:
- further parsing means to parse the plurality of behaviors into a plurality of scenarios of a set of scenario types.

12. Mobile device according to claim 11, arranged to register each happening at a unique time instant wherein each behavior of the plurality of behaviors corresponds to a unique time interval and wherein each scenario corresponding to a further unique time interval.

13. Mobile device according to any of the claims 10 - 12, wherein one of the sensors of the one or more sensors is arranged to measure a field strength of a field emitted by a further device and to determine the distance to the further device based on the measured field strength.

14. Mobile device according to claim 13, comprising a Bluetooth device, wherein the further device comprises a further Bluetooth device, the mobile device being arranged to:
- set the Bluetooth device in central mode at a first time instant;
- build a connection with the further Bluetooth device, the further Bluetooth device being in peripheral mode and measuring the field strength of the field emitted by the further Bluetooth device;
- switch the Bluetooth device into peripheral mode after a random time interval.

15. Mobile device according to any of the claims 10 to 14 arranged to trigger the registration of a happening upon a change in the location of the device or a change in the output of one or more sensors.
